# EUROPEAN PATENT SPECIFICATION

(11) **EP 2 597 847 B1**
(45) Date of publication and mention of the grant of the patent: **04.01.2017**
(21) Application number: 12192601.8
(22) Date of filing: 14.11.2012
(51) Int. Cl.: H04M 1/725, H04Q 3/00, H04W 4/02, H04M 3/42, H04W 4/14

(54) **Inbound unified identifier telecommunication system**
Inbound-Unified-Identifier-Telekommunikationssystem
Système de télécommunications d'identificateur unifié d'arrivée

(30) Priority: 14.11.2011 GB 201119562
(43) Date of publication of application: 29.05.2013
(73) Proprietor: Tyntec Limited, Douglas IM1 1QA (GB)
(72) Inventor: Trapp, Thorsten, 58095 Hagen (DE)
(74) Representative: Madgwick, Paul Roland

(56) References cited:
- EP-A1- 1 408 705
- WO-A1-2006/040749
- DE-A1- 10 121 705
- GB-A- 2 448 689
- US-A1- 2002 176 561

## Description

### FIELD OF THE INVENTION

The present invention concerns the provision of an improved service to a subscriber on the inbound side of a telecommunications link. It has particular application to the reception of communications in a mobile cellular telephone network. Communications in a cellular telephone network comprise for example SMS-messages, video and voice calls, mobility management messages, structured supplementary services (SS) and unstructured supplementary services (USSD).

### BACKGROUND

Digital mobile cellular telephone networks in everyday use operate in accordance with a set of standards published by the European Telecommunications Standards Institute (ETSI), known as the Global System for Mobile Communications (GSM). The original GSM Standard also referred to as the second generation (2G) digital cellular networks is being superseded by third generation standards (3G) comprising the Universal Mobile Telecommunication System (UMTS). A fourth generation of standards (4G) is being introduced. Another further set of standards referred to as Signalling System No. 7 (SS7) governs the signalling necessary to route telephone calls within the public-switched telephone network and between mobile networks.

These mobile cellular telephone systems include among other services voice, video and data services as well as datagram services commonly known as short message service (SMS). The short message service enables users to send a short text message to each other over the network. This may be used for confirming an appointment, sending a greeting or passing the telephone number for a mutual friend, etc.

A current trend in the telecommunications industry is a move towards unified communications systems, which is the pursuit of the desire to have a unified identifier for all of a user's communication types - telephone - fax - SMS - video conferencing - e-mail. Such unified communications systems usually comprise a web platform, which may be used for configuration of the unified identifier communications system as well as for viewing of received messages. An advantage of a unified communications system becomes apparent, when a mobile communications user wishes to store received SMS messages in an archive for later reference. While mobile telephones generally provide such a storage facility, some mobile telephones do not have large memories so that the storage capacity for incoming SMS messages is limited. The same applies to other inbound communications for example multi-media. Also if the telephone is mislaid or damaged the entire archive becomes inaccessible.

There have been various proposals for the introduction of a special unified identifier. Particularly popular unified communication identifiers are special telephone numbers. Calls placed to such telephone numbers are re-directed to the user's mobile or land-line telephone according to the user's choice. With such a system, when a calling party A makes a voice call, or sends an SMS to the special number, it is redirected to the called party B's normal (or mobile) telephone number. The redirection is completely transparent in the direction from the calling party A to the called party B. When, however, the called party B returns the call or SMS they can only do so from their handset, which has an identifier assigned by their regular provider and not the special unified number. Accordingly, any reply (voice or SMS) identifies subscriber B by a different number from that which was used by subscriber A to call subscriber B in the first place. For this reason, unified number systems, which rely on redirection are not satisfactory.

Other systems seeking to unify the inbound communication (UIC) onto a single platform, thereby enabling the called party to retrieve all communications on one interface, are discussed in document WO 2008/128774 (Tyntec) and DE 101 21 705 (Web.de). Communications received by a number of different networks are terminated on the operator's infrastructure and sent by IP channels to a central platform, after which they can be forwarded to an enterprise customer who may, for example, run a website on which the subscribers have accounts and can read their SMS messages together with e-mails and can even initiate SIP voice calls. Terminating all messages on a central platform, however, denies the user the advantages of receiving messages on their mobile handsets.

A further difficulty is that not all subscribers wish to take advantage of unified identifiers or unified inbound communication even if provided. Thus, ideally, unified inbound communication (UIC) is an extra service that a mobile network operator can provide, at an extra cost, only to those subscribers who want it.

From the perspective of the mobile network operator (MNO), there is reluctance to introduce any extra service if it requires the redesign of the core components of the network equipment. Redesign can easily lead to increased transmission delays and reduced reliability. These negative side effects affect all subscribers, not just those taking advantage of the new service. An example of a known arrangement, which suffers from this disadvantage, is shown in document WO 2006/040749. In this arrangement, HLR queries concerning SMSs are routed to a Smart Services Control Node (SSCN) which determines, based on the identity of the customer, whether smart services should be applied to the SMS. If smart services are required, the address of the SSCN is inserted in the HLR response in place of the true address of the SMS recipient. To intercept HLR queries the system uses an intelligent routing node IRN which monitors all incoming HLR queries separating out those which concern SMSs for routing to the SSCN. The SSCN then determines whether a smart service is required. Both the intelligent routing node IRN and the SSCN are additional hardware items which can appear in the signalling path, causing delays and reduced reliability, even for subscribers who do not wish to take advantage of any smart service. A similar arrangement is shown in EP 1 408 705 which shares this disadvantage. Additionally, US 2002/176561 discloses an STP for detecting and intercepting signaling to ported subscribers.

A mobile network operator would therefore like to be able to provide the extra features of a unified identifier / unified inbound communication service just to those subscribers who specifically enrol for it, but leave the remainder, i.e. the bulk of regular subscribers with a basic unaffected service.

An aim of the present invention is to provide extra services only to those customers that have subscribed to them with minimum modification of the mobile network operator's core hardware, and minimum interference to the service to other customers.

### SUMMARY OF THE INVENTION

In accordance with a first aspect of the present invention there is provided a method of handling the signalling concerning inbound communication for a subscriber of a mobile communication network according to claim 1.

The communication may be a short message (SMS) and the signalling items may in accordance with the Mobile Application Part (MAP) of the Digital Cellular Telecommunication System as defined in ETSI TS 100 974. Other tests which may be performed in the dummy communication device may include extracting geographic location information from signalling items and directing the signalling back to the core hardware; as the original or a copy. There it would update the HCR with the location of the handset to which it pertains.

In accordance with another aspect of the invention there is provided a system according to claim 6. The decision unit may define a decision tree based on the content of the diverted signalling. The communication may be a short message (SMS). The system may further include an SMS-C (SMS-Centre) connected to the enterprise platform and configured to send a duplicate to a respective subscriber of any short message received from the dummy termination device for that subscriber, wherein the SMS-C has an identifier that is contained in signalling sent by the SMS-C in the course of sending the duplicate SMS that identifies the SMS-C as blacklisted; and the decision unit includes logic to detect the identifier of the blacklisted SMS-C and respond by forwarding said signalling to the home location register as if it had not been diverted. The signalling may include items representing indications of the current location of a subscriber's mobile terminal and the decision unit has logic configured to check the diverted signalling items for indications of the current location of a respective subscriber's mobile terminal, and to send said current location indication to the enterprise platform, and to direct the said signalling item to the home location register as if it had not been diverted. The signalling items may be in accordance with the Mobile Application Part (MAP) of the Digital Cellular Telecommunication System as defined in ETSI TS 100 974.

### BRIEF DESCRIPTION OF THE DRAWINGS

To facilitate the understanding of the invention, an embodiment will now be described by way of example only making reference to the following drawings.
- Fig. 1: is a network system overview block diagram.
- Fig. 2A: shows a sequence diagram for the passage of an SMS in the system of Fig. 1 where the subscriber is not a unified identifier subscriber.
- Fig. 2B: shows a sequence diagram for the passage of an SMS in the system of Fig. 1 where the subscriber is a unified identifier subscriber and has elected to receive SMSs on their handset (mobile terminal).

### DETAILED DESCRIPTION

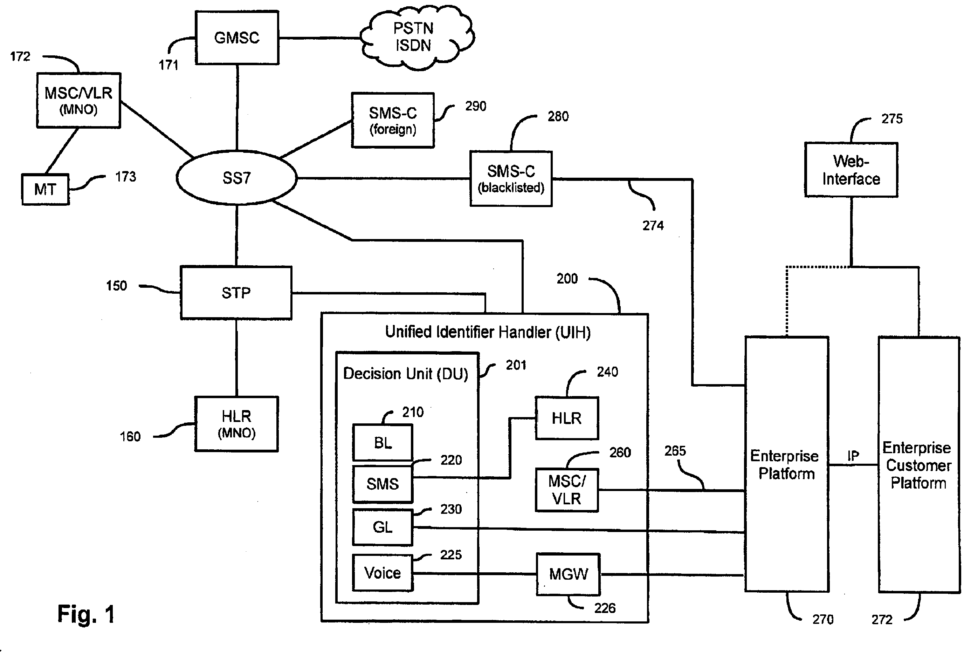

In Fig. 1 a mobile network operator (MNO) system is illustrated in a highly simplified form. The mobile network includes a plurality of mobile switching centres (MSC) 172, each of which has or is coupled to a visitor location register (VLR) and serves a particular geographical area. Within that geographical area a number of handsets/mobile terminals (MT) 173 may be present, each of which has an entry in the visitor location register so that any calls received by the mobile switching centre 172 can be forwarded to the appropriate mobile terminal (MT) 173. In Fig. 1 only one MSC/VLR combination 172 is shown and only one mobile terminal 173, although in practice there would be many MSC/VLR combinations 172 each serving many mobile terminals 173.

The mobile network also includes a home location register (HLR) 160 containing an entry for each subscriber's mobile terminal authorized to use the mobile core network. An HLR is standard telecommunication equipment and for instance described in ETSI TS 100 974. Among other things an HLR provides a subscriber's current location in terms of the MSC/VLR the subscriber's MT is connected to. The HLR 160 is continually being updated by information from the mobile terminals 173 received via the mobile switching centres MSC/VLR 172. The home location register (HLR) 160 and the mobile switching centres MSC/VLR 172 are linked via the SS7 signalling network.

### The Upstream STP

Between the home location register (HLR) 160 and the SS7 network there is a signalling transfer point (STP) 150 of the type widely used as part of the core hardware to provide routing/switching functionality including but not limited to mobile number portability (MNP), as for instance is described in ETSI EN 301 715. Mobile number portability (MNP) as provided by STPs generally is referred to as MNP-SRF (mobile number portability signalling relay function).

Mobile number portability enables a subscriber to keep their old telephone number when they change networks. Signalling items, e.g. HLR queries, are initially routed according to the user's telephone number (MSISDN). When a subscriber has changed their mobile network operator (for instance for better tariffs) it is necessary to divert any incoming signalling to the subscriber's new network. The STP with mobile number portability signalling relay function operates in conjunction with a database of the ported numbers (SRF database - not shown). Each original subscriber of the local mobile network operator that has ported their number to a recipient mobile network has an entry in the SRF database, which associates the ported telephone number (MSISDN) with routing information for the recipient mobile network to which the number has been ported.

Thus if the database contains an entry indicating that the number has been ported to another mobile network, the signalling is routed by the STP with MNP-SRF to the other network. On the other hand, signalling for which the destination number is not shown as ported in the SRF database is forwarded to the home location register (HLR) of the local mobile network operator, as shown by reference numeral 160 in Fig.1.

All of the structure described so far with respect to Figure 1 is conventional. The Fig. 1 arrangement however uses the conventional STP to separate incoming signalling, for example HLR queries, relating to a group of users that have subscribed to an extra service, i. e. a Unified Identifier Service from signalling related to the remainder of the subscribers.

It does this by adding entries, e.g. the MSISDN, for the Unified Identifier (UI) subscribers to the SRF database (not shown) with appropriate destination addresses to cause, preferably, all the signalling from those subscribers to be diverted to a Decision Unit (DU) 210 within a Unified Identifier Handler (UIH) 200.

To reduce the need for modification of the core hardware and the risk of interference to the service for regular subscribers, no detection of the nature of the signalling is undertaken at the STP 150. For example, signalling for a UI subscriber is diverted irrespective of whether it concerns an SMS, mobility management, or any other function. To achieve the diversion the new destination for the diverted signalling is provided in the SRF database. This may be an identifier (e.g. a Global Title or other appropriate signal routing address) of the decision unit 201 within the unified identifier handler (UIH) 200.

### The decision unit

The decision unit (DU) 201 contains logic able to look inside the incoming signalling items and detect certain conditions for instance within the primitives of the signalling such as MAP-primitives. Mobile application part (MAP) services are standard mobile network functions as for example described in ETSI TS 100 974. The logic within the decision unit 201 is composed of a series of plugins (modules) and can be extended simply by adding more plugins each configured to detect a particular situation within the incoming signalling. The decision unit can readily be upgraded to add more functionality by the addition of further plugins / modules beyond those specifically shown in Fig. 1.

Also as part of the unified identifier handler (UIH) 200 there is provided a second home location register (HLR) 240 and a virtual mobile switching centre and visitor location register (MSC/VLR) 260. The second home location register 240 has an entry for at least each of the UI subscribers. In contrast to the MNO's HLR 160 which contains MSC/VLR location information for a subscriber's actual mobile terminal, the UIH's HLR 240 references the virtual MSC/VLR 260 as being the network node in which the mobile terminal is located. The virtual MSC/VLR combination in the UIH is then able to receive the communication and where appropriate terminate it. This is particularly advantageous in the case of SMSs, as will be discussed below.

### SMS Module

Plugin 220 within the decision unit (DU) tests whether an incoming signalling item is an HLR query for an SMS. If it is, routing information is sought from the second HLR 240, which in turn, results in the SMS being sent to the virtual MSC/VLR 260. Thus the second HLR 240 and the virtual MSC/VLR 260 form a dummy termination device for incoming SMSs intended for UI subscribers.

Once a short message has arrived at the virtual MSC/VLR 260 it is outputted / communicated via line 265 typically by IP protocol, to an enterprise platform 270, which in turn communicates with an enterprise customer's platform 272. Typically the subscriber has an account on the enterprise customer's platform. The subscriber can log-in to their account and thereby read incoming SMS messages. In order to associate a user account on one or both of the platforms 270, 272 with the short message the short message typically is outputted to the platforms together with an indication of the subscriber for which it was destined.

### The Voice Module

There may be provided a voice plugin 225 provided within the DU 201 which is adapted to identify voice and/or video signalling and is adapted to either re-divert the voice/video signalling items to the mobile network operator, such as to an MNO's HLR, or to a media gateway (MGW) 226 for forwarding the call to a VoIP (voice over IP) system. Whether a call is re-diverted to the mobile network operator or to the media gateway 226 depends on a user setting in the enterprise platform 270 and/or enterprise customer platform 272. Typically voice signalling is transferred from a public switched telephone network (PSTN) or from an ISDN network via a gateway mobile switching centre (GMSC) 171 into the SS7 infrastructure of a mobile network.

### Geo-location-Module

The decision unit 201 also contains a geo-location plugin 230 able to detect the signalling representing actual updates of location information of a particular mobile terminal (MT) 173. Such signalling, if it concerns a UIC subscriber, is diverted by the STP 150 and therefore arrives at the decision unit 201. At the decision unit the signalling is recognised as location information and sent/outputted via an IP connection to the enterprise platform 270, and on to platform 272 of the enterprise customer. However such location information is also required by HLR 160 of the mobile network operator for mobility management. Accordingly the geo-location plugin 230 makes a copy of the location information signalling and sends it back to the MNO's HLR 160. Location information outputted to the enterprise platform 270 and/or the enterprise customer's platform 272 may be forwarded or made accessible on the user interface 275 allowing a UI subscriber to which the location information applies to view it on the user interface 275. Alternative ways of utilizing the geo-location information outputted to the platforms 270, 272 comprise for example offering location based information or services such as the presentation of local dining offers to a UI subscriber.

### Blacklist-Module

A blacklist plugin 210 within the decision unit is responsible for enforcing a blacklist, for example based on originating Global Title (GT). A Global Title is an address used in routing signalling messages on telecommunication networks. A description of the corresponding network protocol SCCP can be found in ETSI EG 201693. Any signalling item which meets the criterion for the blacklist is rejected, whereupon it is returned to the home mobile network HLR 160 as if it had not been diverted in the STP 150. The function of the blacklist will become apparent in the discussion below concerning the transmission of SMS messages.

### Other Signalling

All other signalling which is not specifically recognized by the plugins of the decision unit 210 is also sent back to the HLR 160 of the mobile network operator to be handled in the normal way according to the specific mobile network system such as the GSM-System. This includes, for example, messages necessary for the maintenance of the user's handset, such as ATI, SI, USSD, SS, etc.

In summary therefore the decision unit 201 may act in one of the following manners depending on the nature of the signalling items.
(a) Use the signalling within the UIH as in the case of the HLR lookups for SMS messages to be terminated in the UIH,
(b) re-divert, i. e. reject the signalling, whereupon it is returned to the home mobile network, typically the home location register HLR 160;
(c) extract data from the signalling and then re-divert the signalling as in (b).

### Enterprise Platform and Enterprise Customet's Platform

The unified identifier handler (UIH) 200 is coupled to an enterprise platform 270 which in turn may be coupled to an enterprise customer's platform 272, typically via IP connections. This includes a line 265 from the MSC/VLR 260 forming part of the dummy termination device 240, 260 for SMS messages and one or more other lines from other plugins configured to communicate other information about the subscriber to the enterprise platform 270. These may, for example, be geo-location information, extracted from mobility management messaging forward to the MNO system.

The enterprise platform 270 and/or the enterprise customer's platform 272 is also connected, typically via an IP connection, to a dedicated short message service centre SMS-C 280. For reasons that will become apparent below, the address, e.g. a Global Title (GT) of this SMS-C appears in the blacklist held by the blacklist plugin 210.

The enterprise platform 270 and/or the enterprise customer's platform 272 is connected to a web interface 275, for example a web browser examples of web browsers are as Safari, Chromium, Lynx, Opera, and Firefox. Via the web interface 275 a user can log on to the enterprise customer platform 272 and view selected data, for example, their own incoming SMS messages and the geographic location of their mobile terminal. Also via the enterprise customer's platform 272 the user can send e-mails and use a wide range of web-based services, as are well known.

The user web interface 275 also can be provided with user controls, one of which gives the user the opportunity to choose how they wish to receive SMS messages. This control may have four settings; (a) receive SMS messages on the mobile handset only; (b) receive SMS messages both on the mobile handset and on the web interface; (c) receive SMS messages only on the web interface, and (d) do not receive SMS messages at all. These settings would be applied to all incoming message, or be based on the message origin or content.

The user's selection is typically communicated back to the enterprise platform to control the handling of SMS as will now be described.

Settings (a) and (b) require the SMS to be received on the mobile terminal (handset). In those cases when an incoming SMS has been received and communicated via the line 265 to the enterprise platform 270, the enterprise platform 270 instructs the dedicated SMS-C to send a duplicate of the SMS message back into the SS7 network. The duplicate SMS message is identical to the original SMS message except for a data field indicating the identity of the originating SMS-C. In common with the original SMS, the routing request for this duplicate SMS contains a data field indicating that it is directed to a UI subscriber. As a consequence the signalling is diverted by the STP 150 and sent to the decision unit 201, as was the original SMS. However, because it originates from the dedicated SMS-C, which is blacklisted, it is rejected in the blacklist plugin 210 and returned to the mobile network operator's system as if it has not been diverted. This causes the SMS payload to be routed according to the data in the mobile network operator's HLR 160 to the relevant MSC/VLR 172 and displayed on the user's actual mobile terminal 173.

The return, i.e. re-diverting, of signalling as if it had not been diverted by the STP 150 as is done by the blacklist plugin 210, can for example, be achieved by re-routing the signalling using the specific Global Title (GT) of the home mobile network operator's home location register (HLR) 160. Alternative means for re-diverting comprise the use of a destination point code (DPC) as is for instance used with Message Transfer Part (MTP) as in ETSI EN 300 008. Re-diverting can mean that the signalling is routed as if the routing were based on common MSISDN routing, i.e. routing in order to achieve the same functionality as would be applied to signals from non-UI subscribers.

The division of tasks between the enterprise platform 270 and the enterprise customer's platform can be varied and depends on which commercial entities own the various hardware items concerned. Typically in the Figure 1 arrangement a home mobile network operator would be responsible for the MSC/VLR combinations 172, the HLR 160, and its up-stream STP 150. Also on the mobile network operator's premises could be the UIH 200, the enterprise platform 270 and the blacklisted SMS-C. The enterprise customer would typically be a commercial portal or social networking platform. It is also envisaged, in an alternative arrangement, that the enterprise platform 270 and the enterprise customer's platform be combined.

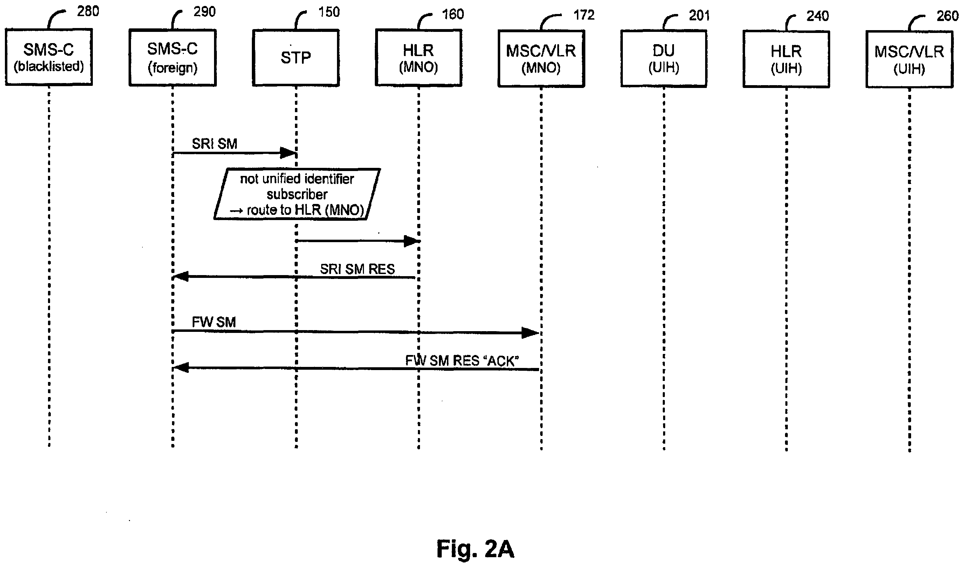

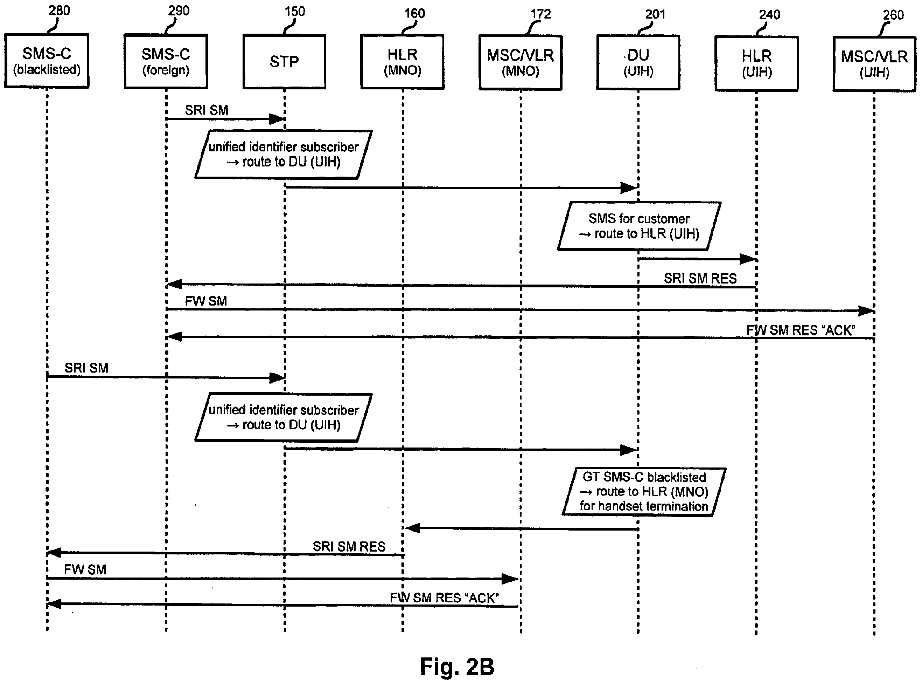

The operation of the system of Fig.1 for the receipt of an SMS will now be illustrated by reference to sequence diagrams Figs. 2A and 2B. The abbreviations used are derived from MAP Operations/Functions as defined in the MAP standard according to ETSI TS 100 974.

### Example 1 - SMS Delivery to a Non-UI Service Customer

Fig. 2A shows the sequence for the delivery of an SMS message to a non-UI subscriber. This comprises the standard way of delivery of a short message in today's mobile networks. Firstly, a request for routing information for delivery of a short message (SRI SM) is sent by the SMS-C 290 at the sender's mobile network. For convenience, we shall refer to this as the foreign SMS-C although in practice it can be an SMS-C on the same network. The request for routing information SRI SM is transmitted via the SS7 network and routed according to its destination MSISDN. When the request arrives at the STP 150 the destination MSISDN is compared with data contained in the SRF database. In the case illustrated in Fig. 2A it is ascertained that the destination MSISDN does not belong to a UI subscriber (and is not ported to another network). The request for routing information is therefore forwarded to the HLR 160 of the home mobile network operator. The HLR 160 responds with routing information SRI SM RES directly to the foreign SMS-C 290. The foreign SMS-C 290 responds by forwarding the short message payload FW SM, which is sent directly to the MSC/VLR 172 at the location of the destination handset/mobile terminal (MT) 173. The MSC/VLR 172 than handles the further steps necessary for causing the SMS text to be displayed on the user's handset. The MSC/VLR 172 responds with an acknowledgment FW SM RES "ACK" directly to the foreign SMS-C 290 to complete the delivery of the short message.

### Example 2 - SMS Delivery to a UI Service Customer

Fig. 2B is a sequence diagram for the delivery of an SMS to a UI service customer. Firstly, the foreign SMS-C 290 sends a request for routing information SRI SM, which is received via the SS7 network at the MNO's equipment on the STP 150. The destination MSISDN is checked and found to be in the SRF database. The request for routing information is thus forwarded to the DU 201, which tests the signalling item (in this case a MAP message) and determines that the request for routing information concerns an SMS. As a consequence, the request is routed to the second HLR 240 also within the unified identifier handler (UIH) 200. This responds to the foreign SMS-C 290 with the address SRI SM RES of the virtual MSC/VLR 260. The foreign SMS-C 290 then sends the short message payload FW SM, which is received by the virtual MSC/VLR 260 and triggers a signal to the enterprise platform on the line 265 (Fig. 1). At the same time, the virtual MSC/VLR 260 acknowledges receipt of the SMS message FW SM RES "ACK", thereby terminating receipt of the SMS as far as the foreign SMS-C 290 is concerned.

If the user settings at the enterprise customer's platform 272 and/or the enterprise platform 270 are set such that the SMS is to be received on the user's actual handset MT 173, the enterprise platform initiates the resending of the SMS message via a signal line 274 in Fig. 1. This instructs the blacklisted SMS-C 280 to initiate a new SMS message. The content of the SMS message is the same as the original except for the field indicating the Global Title (GT) of the originating SMS-C 280. The sender's address (MSISDN) and destination address (MSISDN) are preserved.

To initiate the resent SMS, the blacklisted SMS-C 280 sends a request SRI SM for routing information directed to the MNO whereupon it arrives at the STP 150. This checks the destination address (MSISDN) in the SRF database. The destination address is found in the database as a UI subscriber whereupon the request for routing is sent to the decision unit 201. This recognizes by means of plugin 210 that the signalling request has come from a blacklisted SMS-C and forwards the request to the MNO's HLR 160. The MNO's HLR 160 has the true location information of the user's mobile terminal (MT) 173 needed for routing the signalling. This location information is sent to the blacklisted SMS-C 280 SRI SM RES which, in turn, responds by forwarding the SMS payload FW SM directly to the appropriate MSC/ VLR 172 enabling the short message to be displayed on the user's mobile terminal MT 173. When the SMS payload has been received the MSC/ VLR 172 signals with an acknowledgement FW SM RES "ACK" directly back to the blacklisted SMS-C 280. This terminates the delivery of the resent SMS.

### Other services

Other services could also be offered from the website including the initiation of SIP calls, the sending and receiving of e-mails and the receipt of voice messages. To enable new functions involving the detection of MAP signalling associated with other events all that is necessary is to add further plugins to the decision unit (DU) 201. With suitable plugins other signalling items such as unstructured supplementary service data (USSD) can be recognised and handled by the UIH. For instance USSD may be intercepted and sent to the enterprise platform 270 /enterprise customer's platform 272 for optional display on the web interface 275. Alternatively or in addition the data may also be sent to the handset/mobile terminal (MT) by re-diverting the signalling items back into the MNO's system.

### Advantages

The system illustrated above is able to provide enhanced services to "extra service" subscribers (e.g. a Unified Identifier (UI) service subscriber) and yet minimize the impact on regular subscribers. It does this by diverting the signalling related to the "extra service" subscribers on the upstream side of the local mobile network operator's equipment. This leaves signalling destined for other users unaffected. Preferably all signalling for the "extra service" subscribers is intercepted not just signalling related to SMS traffic. This enables use of standard core hardware. Signalling that is not required for the "extra service" is fed back to the core hardware. Signalling that is needed for the extra service but also must be received by the core hardware is copied back.

A further advantage of the system described above is added security arising from the fact that the user controls for SMS message reception are placed on a separate platform (the enterprise, or enterprise customer's platform) thus not requiring any connection directly to the mobile telephone switching system.

With the system described, a mobile network operator can readily provide unified identifier communication to customers without them having to change their telephone numbers (MSISDN). This removes the need for re-direction. The customer can choose whether they have a normal subscription or a UI subscription keeping the same telephone number. When a subscriber wishes to upgrade from a regular service to a UI service all that is necessary is for the mobile network operator to add their telephone number to the SRF database for the MSP-SRF of the STP. In addition, an enterprise customer and/or an enterprise platform administrator may create an account on the enterprise platform and/or enterprise customer's platform 272 for that subscriber.

## Claims

1. Method of receiving communications destined for subscribers at a mobile telephone network,
wherein the mobile telephone network has a plurality of destination subscribers each having a mobile terminal (174), the destination subscribers including
a first group to which a extra service is to be applied and
a second group to which the extra service is not to be applied,
the method comprising:
receiving a plurality of items of incoming signalling at a switch/STP (150) of the mobile telephone network wherein each item of signalling includes an indication of the destination subscriber which it concerns, and the items of signalling include requests for routing information for communications;
diverting, by the switch/STP (150), all of the signalling items which concern subscribers of the first group and leaving undiverted the signaling items which concern subscribers of the second group;
responding, by a decision unit (201), to requests for routing information in the diverted signalling items with the address of a dummy termination device (260, 226) comprising a virtual MSC/VLR which causes the respective communications to be routed to the dummy termination device (260) instead of to the mobile terminals (174) of the respective destination subscribers;
responding, by a Home Location Register (160), to requests for routing information in the undiverted signalling with routing information of the respective mobile terminal of the destination subscriber enabling the communication to be routed to said mobile terminal (174) of that subscriber;
outputting, by an Enterprise platform (270), the communications from the dummy termination device (260) together with an indication of respective destination subscribers to a web user interface (275) and allowing the destination subscribers to receive their respective communications on the web user interface (275).

2. A method according to claim 1, wherein the communication is a short message (SMS).

3. A method according to claim 2 further including the steps of:
generating a duplicate of the short message delivered to the dummy termination device (260) and marking it as blacklisted;
checking whether said diverted signalling items concerns a blacklisted short message and if so rediverting the signalling item as if they had not been diverted.

4. A method according to any preceding claim wherein the signalling includes items representing indications of the current location of a subscriber's mobile terminal and the method includes the step of checking the diverted signalling items for indications of the current location of a subscriber's mobile terminal;
outputting to the web user interface said current location indication and an indication of the subscriber to which the location information applies, and allowing that subscriber to view said location indication on the web user interface; and
rediverting said signalling item as if it had not been diverted.

5. A method according to any of claims 1-4, wherein said signalling items are in accordance with the Mobile Application Part (MAP) of the Digital Cellular Telecommunication System as defined in ETSI TS 100 974.

6. A system for receiving communications destined for respective destination subscribers at a mobile telephone network,
wherein the mobile telephone network has a plurality of destination subscribers each having a mobile terminal (174), the subscribers including:
a first group to which an extra service is to be applied, and
a second group to which the extra service is not to be applied,
the system comprising:
a switch/STP (150) including a database of said destination subscribers with an indication as to whether subscribers belong to the first group, and configured to receive a plurality of items of incoming signalling at the mobile telephone network, wherein each item of signalling includes an indication of the destination subscriber which it concerns, and the items of signalling include requests for routing information for respective communications; said switch/STP (150) further being configured to divert all signalling items which concern destination subscribers of the first group and leaving undiverted signalling items which concern destination subscribers of the second group;
a decision unit (201) configured to receive the diverted signalling items from the switch/STP (150) and containing logic (220) configured to respond to requests for routing information for the communication with the address of a dummy termination device (260) comprising a virtual MSC/VLR which causes the respective communication to be routed to the dummy termination device (260) instead of to the mobile terminal of the respective destination subscriber;
a home location register (160) configured to receive the undiverted signalling items from the switch/STP (150) and to respond to requests for routing information for respective communications with routing information of the destination subscriber enabling the respective communication to be routed to said mobile terminal (174) of that subscriber; and
an enterprise platform (270) connected to the dummy termination device (260) configured to receive the communications from the dummy termination device (260, 226) together with an indication of the respective destination subscribers, and being configured to pass the communication to a web user interface (275) and allow the respective destination subscriber to receive it on the web user interface (275).

7. A system according to claim 6, wherein the decision unit (201) defines a decision tree based on the content of the diverted signalling.

8. A system according to claim 6 or 7, wherein the communication is a short message (SMS).

9. A system according to claim 10, further including
an SMS-C (SMS-Centre) (280) connected to the enterprise platform (270) and configured to send a duplicate to a respective subscriber of any short message received from the dummy termination device (260) for that subscriber,
wherein the SMS-C (280) has an identifier that is contained in signalling sent by the SMS-C (280) in the course of sending the duplicate SMS that identifies the SMS-C (280) as blacklisted; and
the decision unit (201) includes logic (210) to detect the identifier of the blacklisted SMS-C (280) and respond by forwarding said signalling to the home location register (160) as if it had not been diverted by the switch/STP.

10. A system according to any of claims 6-9, wherein the signalling includes items representing indications of the current location of a subscriber's mobile terminal and the decision unit (201) has logic (230) configured to check the diverted signalling items for indications of the current location of a respective subscriber's mobile terminal (174), and to send said current location indication to the enterprise platform (270), and to direct the said signalling item to the home location register (160) as if it had not been diverted by the switch/STP.

11. A system according to any of claims 6-10, wherein said signalling items are in accordance with the Mobile Application Part (MAP) of the Digital Cellular Telecommunication System as defined in ETSI TS 100 974.

## Patentansprüche

1. Verfahren zum Empfang von Mitteilungen, die für Teilnehmer eines mobilen Telefon-Netzwerks bestimmt sind,
wobei das mobile Telefon-Netzwerk eine Vielzahl von Ziel-Teilnehmern aufweist, wobei jeder ein mobiles Endgerät (174) besitzt und wobei die Ziel-Teilnehmer
eine erste Gruppe umfassen, denen ein Extra-Service zuteil wird und
eine zweite Gruppe umfassen, denen der Extra-Service nicht zuteil wird,
das Verfahren umfasst:
den Empfang einer Vielzahl von Datenwörtern von eingehenden Signalen bei einem Switch/STP (150) des mobilen Telefon-Netzwerks, wobei jedes Datenwort des Signals eine Angabe des Ziel-Teilnehmers umfasst, den es betrifft, und die Datenwörter des Signals Anfragen zur Informations-Weiterleitung der Mitteilungen umfassen;
die Umleitung aller Signal-Datenwörter durch den Switch/STP (150), die die Teilnehmer aus der ersten Gruppe betreffen, und die Nicht-Umleitung der Signal-Dateiwörter, die Teilnehmer der zweiten Gruppe betreffen;
die Beantwortung von Anfragen zu Routing-Informationen in den umgeleiteten Signal-Datenwörtern durch eine Entscheidungs-Einheit (201) mit der Adresse eines Dummy-Endgeräts (260, 226), welches eine virtuelle MSC/VLR umfasst, die bewirkt, dass die entsprechenden Mitteilungen zu dem Dummy-Endgerät (260) geroutet werden anstatt zu dem mobilen Endgerät (174) des entsprechenden Ziel-Teilnehmers;
die Beantwortung durch ein Heimatortregister (160) von Anfragen zu Routing-Informationen in den nicht-umgeleiteten Signalen mit Routing-Informationen des entsprechenden mobilen Endgeräts des Ziel-Teilnehmers, die es ermöglichen, die Mitteilungen zu dem genannten mobilen Endgerät (174) dieses Teilnehmers zu routen;
die Ausgabe der Mitteilungen aus dem Dummy-Endgerät (260) durch eine Enterprise-Plattform (270), zusammen mit einer Angabe des entsprechenden Ziel-Teilnehmers in einer web-basierten Benutzeroberfläche (275), wobei es dem Zielteilnehmer ermöglicht wird, die entsprechenden Mitteilungen auf der web-basierten Benutzeroberfläche (275) zu empfangen.

2. Verfahren nach Anspruch 1, wobei die Mitteilung eine Kurznachricht (SMS) ist.

3. Verfahren nach Anspruch 2, das weiterhin die folgenden Schritte umfasst:
die Erzeugung einer Kopie der Kurznachricht, die an das Dummy-Endgerät (260) geschickt wurde und die Markierung dieser als auf die schwarze Liste gesetzt;
die Abfrage, ob die umgeleiteten Signal-Datenwörter eine auf die schwarze Liste gesetzte Kurznachricht betreffen, und falls dies so ist, die Signal-Datenwörter so zurück umzuleiten, als ob sie gar nicht umgeleitet worden wären.

4. Verfahren nach einem vorherigen Anspruch, wobei die Signale Datenwörter umfassen, die Angaben des derzeitigen Ortes des mobilen Endgeräts des Teilnehmers darstellen, wobei das Verfahren die Schritte umfasst, die umgeleiteten Signal-Datenwörter nach Angaben des derzeitigen Ortes des mobilen Endgeräts des Teilnehmers abzufragen;
die Ausgabe der derzeitigen Ortsangabe an die web-basierte Benutzeroberfläche und eine Angabe des Teilnehmers, zu dem die Ortsinformation gehört und es dem Teilnehmer ermöglicht, diese Ortsangabe in der web-basierten Benutzeroberfläche zu betrachten; und
die Signal-Datenwörter zurück umzuleiten, als ob sie nicht umgeleitet worden wären.

5. Verfahren nach jedem der Ansprüche 1 - 4, wobei die Signaldatenwörter mit dem Mobile Application Part (MAP) des digitalen Zell-Telekommunikationssystems übereinstimmen, wie in ETSI TS 100 974 definiert.

6. System zum Empfang von Mitteilungen, die für die jeweiligen Ziel-Teilnehmer eines mobilen Telefon-Netzwerks bestimmt sind,
wobei das mobile Telefon-Netzwerk eine Vielzahl von Ziel-Teilnehmern aufweist, wobei jeder ein mobiles Endgerät (174) besitzt, und
wobei die Ziel-Teilnehmer:
eine erste Gruppe umfassen, denen ein Extra-Service zuteil wird, und
eine zweite Gruppe umfassen, denen der Extra-Service nicht zuteil wird,
das System umfasst:
einen Switch/STP (150) mit einer Datenbank der Ziel-Teilnehmer mit einer Angabe, ob die Teilnehmer zu der ersten Gruppe gehören, und der so eingerichtet ist, eine Vielzahl von Datenwörtern von eingehenden Signalen von mobilen Telefon-Netzwerken zu empfangen, wobei jedes Datenwort des Signals eine Angabe des Ortes des Teilnehmers umfasst, den es betrifft, und die Datenwörter der Signale umfassen Anfragen zu Routing-Informationen für die entsprechenden Mitteilungen; der Switch/STP (150) ist weiterhin eingerichtet, alle Signal-Datenwörter, die Orte von Teilnehmern der ersten Gruppe betreffen, umzuleiten und Signal-Datenwörter, die den Ort von Teilnehmern der zweiten Gruppe betreffen, nicht umzuleiten;
eine Entscheidungs-Einheit (201), die eingerichtet, ist die umgeleiteten Signal-Datenwörter aus dem Switch/STP (150) zu empfangen, und eine Logik (220) enthält, die eingerichtet ist, auf Anfragen zu Routing-Informationen für die Mitteilungen mit der Adresse eines Dummy-Endgeräts (260), die eine virtuelle MSC/VLR umfasst, zu antworten, die bewirkt, dass die entsprechenden Mitteilungen zu dem Dummy-Endgerät (260) geroutet werden, anstatt auf das mobile Endgerät des entsprechenden Ziel-Teilnehmers;
ein Heimatortregister (160), das eingerichtet ist, die nicht umgeleiteten Signal-Datenwörter aus dem Switch/STP (150) zu empfangen und Anfragen zu Routing-Informationen für die entsprechenden Mitteilungen mit Routing-Informationen des Ziel-Teilnehmners zu beantworten, und es ermöglicht, dass die entsprechenden Mitteilungen zu dem mobilen Endgerät (174) des Teilnehmers geroutet werden; und
eine Enterprise-Plattform (270), die mit dem Dummy-Endgerät (260) verbunden und eingerichtet ist, die Mitteilungen von dem Dummy-Endgerät (260, 226) gemeinsam mit einer Angabe des entsprechenden Ziel-Teilnehmers zu empfangen, und die eingerichtet ist, die Mitteilungen zu einer web-basierten Benutzeroberfläche (275) weiterzuleiten und es den entsprechenden Ziel-Teilnehmern zu ermöglichen, diese auf der web-basierten Benutzeroberfläche (275) zu empfangen.

7. System nach Anspruch 6, wobei die Entscheidungs-Einheit (201) einen Entscheidungs-Baum definiert auf Basis des Inhalts der umgeleiteten Signale.

8. System nach Anspruch 6 oder 7, wobei die Mitteilung eine Kurznachricht (SMS) ist.

9. System nach Anspruch 10, weiterhin mit einer SMS-C (SMS-Centre) (280), die mit der Enterprise-Plattform (270) verbunden und eingerichtet ist, eine Kopie von jeder von dem Dummy-Endgerät (260) für diesen Teilnehmer empfangenen Kurznachricht zu einem entsprechenden Teilnehmer zu senden,
wobei die SMS-C (280) eine Kennung aufweist, die in Signalen enthalten ist, die durch die SMS-C (280) im Zuge des Sendens der Kopie-SMS, die die SMS als auf die schwarze Liste gesetzt identifiziert, gesendet wurde; und
die Entscheidungs-Einheit (201) umfasst eine Logik (210), um die Kennung der auf die schwarze Liste gesetzten SMS-C (280) zu erkennen und durch Weiterleiten des Signals zum Heimortregister (160) darauf zu antworten, als ob diese nicht durch den Switch/STP umgeleitet worden wäre.

10. System nach einem der Ansprüche 6-9, wobei die Signale Datenwörter umfassen, die Angaben über den derzeitigen Ort eines mobilen Endgeräts eines Teilnehmer darstellen, und die Entscheidungs-Einheit (201) weist eine Logik (230) auf, die eingerichtet ist, die umgeleiteten Signal-Datenwörter auf Angaben über den derzeitigen Ort eines entsprechenden mobilen Endgeräts (174) eines Teilnehmers zu überprüfen und die derzeitige Angabe des Ortes zu der Enterprise Plattform (270) zu senden, und das Signal-Datenwort zum Heimatortregister (160) zu leiten, als ob dieses nicht durch den Switch/STP umgeleitet worden wäre.

11. System nach einem der Ansprüche 6 - 10, wobei die Signal-Datenwörter mit dem Mobile Application Part (MAP) des digitalen Zell-Kommunikationssystems übereinstimmen, wie in ETSI TS 100 974 definiert.

## Revendications

1. Procédé de réception de communications destinées à des abonnés à un réseau de téléphonie mobile,
dans lequel le réseau de téléphonie mobile a une pluralité d'abonnés de destination ayant chacun un terminal mobile (174), les abonnés de destination incluant :
un premier groupe auquel un service supplémentaire doit être appliqué et
un second groupe auquel le service supplémentaire ne doit pas être appliqué,
le procédé comprenant :
recevoir une pluralité d'éléments de signalisation entrante sur un commutateur/STP (150) du réseau de téléphonie mobile dans lequel chaque élément de signalisation inclut une indication de l'abonné de destination qu'il concerne, et les éléments de signalisation incluent des requêtes d'informations de routage pour des communications ;
faire dévier, par le commutateur/STP (150), tous les éléments de signalisation qui concernent des abonnés du premier groupe et laisser non déviés les éléments de signalisation qui concernent des abonnés du second groupe ;
répondre, par une unité de décision (201), à des requêtes d'informations de routage dans les éléments de signalisation déviés avec l'adresse d'un dispositif de terminaison fictif (260, 226) comprenant un MSC/VLR virtuel qui fait acheminer les communications respectives vers le dispositif de terminaison fictif (260) à la place de vers les terminaux mobiles (174) des abonnés de destination respectifs ;
répondre, par un enregistreur de localisation géographique (160), aux requêtes d'informations de routage dans la signalisation non déviée avec les informations de routage du terminal mobile respectif de l'abonné de destination permettant d'acheminer la communication vers ledit terminal mobile (174) de cet abonné ;
transmettre, par une plate-forme d'entreprise (270), les communications à partir du dispositif de terminaison fictif (260) conjointement avec une indication d'abonnés de destination respectifs vers une interface utilisateur web (275) et permettre aux abonnés de destination de recevoir leurs communications respectives sur l'interface utilisateur web (275).

2. Procédé selon la revendication 1, dans lequel la communication est un message court (SMS).

3. Procédé selon la revendication 2, incluant en outre les étapes de :
générer un double du message court délivré au dispositif de terminaison fictif (260) et le marquer comme figurant sur une liste noire ;
vérifier si lesdits éléments de signalisation déviés concernent un message court figurant sur une liste noire et si tel est le cas, redévier l'élément de signalisation comme s'il n'avait pas été dévié.

4. Procédé selon l'une quelconque des revendications précédentes, dans lequel la signalisation inclut des éléments représentant des indications de la localisation actuelle d'un terminal mobile de l'abonné et le procédé inclut l'étape de vérifier, dans les éléments de signalisation déviés, des indications de la localisation actuelle d'un terminal mobile de l'abonné ;
transmettre à l'interface utilisateur web ladite indication de localisation actuelle et une indication de l'abonné auquel l'information de localisation s'applique, et permettre à cet abonné de visualiser ladite indication de localisation sur l'interface utilisateur web ; et
redévier ledit élément de signalisation comme s'il n'avait pas été dévié.

5. Procédé selon l'une quelconque des revendications 1 à 4, dans lequel lesdits éléments de signalisation sont conformes à l'applicatif de service mobile (MAP) du Système de télécommunication cellulaire numérique tel que défini dans l'ETSI TS 100 974.

6. Système pour recevoir des communications destinées à des abonnés de destination respectifs sur un réseau de téléphonie mobile,
dans lequel le réseau de téléphonie mobile a une pluralité d'abonnés de destination ayant chacun un terminal mobile (174), les abonnés incluant :
un premier groupe auquel un service supplémentaire doit être appliqué, et
un second groupe auquel le service supplémentaire ne doit pas être appliqué,
le système comprenant :
un commutateur/STP (150) incluant une base de données desdits abonnés de destination avec une indication de si des abonnés appartiennent au premier groupe, et configuré pour recevoir une pluralité d'éléments de signalisation entrante sur le réseau de téléphonie mobile, dans lequel chaque élément de signalisation inclut une indication de l'abonné de destination qu'il concerne, et les éléments de signalisation incluent des requêtes d'informations de routage pour des communications respectives ; ledit commutateur/STP (150) étant en outre configuré pour dévier tous les éléments de signalisation qui concernent des abonnés de destination du premier groupe et laisser non déviés des éléments de signalisation qui concernent des abonnés de destination du second groupe ;
une unité de décision (201) configurée pour recevoir les éléments de signalisation déviés provenant du commutateur/STP (150) et contenant une logique (220) configurée pour répondre à des requêtes d'informations de routage pour la communication avec l'adresse d'un dispositif de terminaison fictif (260) comprenant un MSC/VLR virtuel qui fait acheminer la communication respective vers le dispositif de terminaison fictif (260) à la place de vers le terminal mobile de l'abonné de destination respectif ;
un enregistreur de localisation géographique (160) configuré pour recevoir les éléments de signalisation non déviés provenant du commutateur/STP (150) et pour répondre à des requêtes d'informations de routage pour des communications respectives avec des informations de routage de l'abonné de destination permettant d'acheminer la communication respective vers ledit terminal mobile (174) de cet abonné ; et
une plate-forme d'entreprise (270) connectée au dispositif de terminaison fictif (260) configurée pour recevoir les communications provenant du dispositif de terminaison fictif (260, 226) conjointement avec une indication des abonnés de destination respectifs, et étant configurée pour transférer la communication vers une interface utilisateur web (275) et permettre à l'abonné de destination respectif de la recevoir sur l'interface utilisateur web (275).

7. Système selon la revendication 6, dans lequel l'unité de décision (201) définit un arbre décisionnel basé sur le contenu de la signalisation déviée.

8. Système selon la revendication 6 ou 7, dans lequel la communication est un message court (SMS).

9. Système selon la revendication 10, incluant en outre :
un SMS-C (centre de SMS) (280) connecté à la plate-forme d'entreprise (270) et configuré pour envoyer un double à un abonné respectif d'un message court quelconque reçu du dispositif de terminaison fictif (260) pour cet abonné,
dans lequel le SMS-C (280) a un identifiant qui est contenu dans une signalisation envoyée par le SMS-C (280) au cours de l'envoi du SMS en double qui identifie le SMS-C (280) comme figurant dans une liste noire ; et
l'unité de décision (201) inclut une logique (210) pour détecter l'identifiant du SMS-C (280) figurant sur la liste noire et répondre en transférant ladite signalisation à l'enregistreur de localisation géographique (160) comme si elle n'avait pas été déviée par le commutateur/STP.

10. Système selon l'une quelconque des revendications 6 à 9, dans lequel la signalisation inclut des éléments représentant des indications de la localisation actuelle d'un terminal mobile de l'abonné et l'unité de décision (201) a une logique (230) configurée pour vérifier, dans les éléments de signalisation déviés, des indications de la localisation actuelle d'un terminal mobile (174) respectif de l'abonné et pour envoyer ladite indication de localisation actuelle à la plate-forme d'entreprise (270), et pour diriger ledit élément de signalisation vers l'enregistreur de localisation géographique (160) comme s'il n'avait pas été dévié par le commutateur/STP.

11. Système selon l'une quelconque des revendications 6 à 10, dans lequel lesdits éléments de signalisation sont conformes à l'applicatif de service mobile (MAP) du Système de télécommunication cellulaire numérique tel que défini dans l'ETSI TS 100 974.
